Europäisches Patentamt

European Patent Office

Office européen des brevets

(11) Publication number: 0 201 966
A1

# EUROPEAN PATENT APPLICATION

(21) Application number: 86200771.3

(22) Date of filing: 02.05.86

(51) Int. Cl.⁴: **C08L 35/06** , C08L 25/12 , C08L 25/16 , C08L 51/04 , C08L 55/02

(30) Priority: 03.05.85 NL 8501252

(43) Date of publication of application:
20.11.86 Bulletin 86/47

(84) Designated Contracting States:
AT BE CH DE FR GB IT LI NL SE

(71) Applicant: STAMICARBON B.V.
Mijnweg 1
NL-6167 AC Geleen(NL)

(72) Inventor: Roerdink, Eize
Laathofstraat 15
NL-6191 GD Beek(L)(NL)
Inventor: Bruls, Wilhelmus Gerardus Marie
Graaf Wolter Hoenstraat 32
NL-6243 BE Geulle(NL)
Inventor: Van Asperen, Pieter Jan
Op de Windhaspel 9
NL-6191 LC Beek(L)(NL)

(74) Representative: Hoogstraten, Willem Cornelis
Roeland et al
OCTROOIBUREAU DSM Postbus 9
NL-6160 MA Geleen(NL)

(54) Polymer composition.

(57) The invention relates to a polymer composition on the basis of a copolymer of a vinyl aromatic compound and maleic anhydride and a copolymer on the basis of a vinyl aromatic compound and acrylonitrile, characterized in that the polymer composition comprises

a) one or more polymers obtained by polymerization of 20-100 parts by weight of a mixture of 60-80 wt.% styrene and/or $\alpha$-methyl styrene and 20-40 wt.% acrylonitrile in the presence of 0-80 parts by weight of rubber, and

b) a copolymer consisting of 60-80 parts by weight of styrene and 20-40 parts by weight of maleic anhydride, $\Delta M_{20-80}$ being less than 2 wt.% maleic anhydride.

Such polymer compositions have an increased dimensional stability at elevated temperatures in combination with an excellent resistance to solvents, impact resistance, processability and flow.

EP 0 201 966 A1

# POLYMER COMPOSITION

The invention relates to a polymer composition on the basis of a copolymer of a vinyl aromatic compound and maleic anhydride, and a copolymer on the basis of a vinyl aromatic compound and acrylonitrile.

Such polymer compositions are known and one of their advantages is their increased dimensional stability at elevated temperature. In combination with an excellent resistance to solvents and, in general, a good surface gloss, this property renders them very suitable for application in domestic electrical appliances, but also in the automotive industry.

From British patent specifications 1,315,219 and 1,316,330 polymer compositions are known that consist on the one hand of a styrene-maleic anhydride copolymer and on the other of a styrene-acrylonitrile copolymer of styrene-acrylonitrile graft copolymer. Though the polymer compositions described in these publications have a number of advantageous properties, such as satisfactory dimensional stability under heat and good transparency, there is a need for a polymer composition possessing an optimum balance of properties such as impact resistance, dimensional stability under heat (Vicat, HDT), resistance to decomposition, processability, resistance to solvents, flow properties, and the like.

It is an object of the invention to provide a polymer composition possessing such an optimum balance.

To this end, the polymer composition according to the invention is characterized in that it comprises:

a) one or more polymers obtained by polymerization of 20-100 parts by weight of a mixture of 60-80 wt.% styrene and/or $\alpha$-methyl styrene and 20-40 wt.% acrylonitrile in the presence of 0-80 parts by weight of rubber, and

b) a copolymer consisting of 60-80 parts by weight of styrene and 20-40 parts by weight of maleic anhydride, $\Delta M_{20-80}$ being less than 2 wt.% of maleic anhydride.

$\Delta M_{10-90}$ preferably is < 4 wt.% MA.

The term $\Delta M_{x-y}$ is understood to mean the absolute value of the difference in MA content, in wt.%, that is measured in the cumulative distribution curve for the MA content at X and at Y wt.% of the total distribution. A $\Delta M_{10-90}$ is, therefore, calculated by determining the MA content in the cumulative distribution curve at which 10 wt.% of the molecules has a lower MA content, and the MA content at which 90 wt.% of the molecules has a lower MA content. The absolute value of the difference between these two values is $\Delta M_{10-90}$.

The cumulative distribution curve can be determined, for instance, by fractionated precipitation with a solvent/non-solvent system, see e.g.:

1) Die Angewandte Makromolekulare Chemie 33 (1973), 101-110

2) J. Oil Col. Chem. Assoc. 52 (1969) 830-860.

An essential characteristic of the subject invention is that the MA polymer has a very narrow dispersion in MA content, which dispersion is indicated by the $\Delta M$ value. $\Delta M_{20-80}$ must not exceed 2 wt.%, while $\Delta M_{10-90}$ preferably does not exceed 4 wt.%.

The second component of the polymer composition is a copolymer of styrene and/or $\alpha$-methyl styrene with acrylonitrile. This copolymer may optionally have been obtained by polymerization of styrene and/or $\alpha$-methylstyrene with acrylonitrile in the presence of a rubber. The rubber content of the second component will generally not exceed 80 wt.%, and more in particular this rubber content is between 15 and 65 wt.%. The value that is ultimately preferred for the rubber content depends on the desired impact strength in combination with the desired thermal stability of the end product.

Combining of a proportionally small amount of graft copolymer with a high rubber content and a proportionally large amount of styrene-MA copolymer may yield a product that combines a good impact strength with a good dimensional stability under heat (HDT, Vicat).

The ratio of the copolymer on the basis of a vinyl aromatic compound and acrylonitrile to the copolymer on the basis of styrene and maleic anhydride is generally determined by the properties of the desired end product.

The copolymer containing maleic anhydride substantially determines the dimensional stability under heat, while the other desired properties are determined substantially by the second component.

In a preferred embodiment of the invention the polymer composition contains at least three components, viz. the styrene-MA copolymer, a graft copolymer obtained by polymerization of 35-85 wt.% of a mixture consisting of 60-80 wt.% styrene and/or α-methyl styrene and 20-40 wt.% acrylonitrile in the presence of 15-65 wt.% rubber, and, as third component, a copolymer of a vinyl aromatic compound and acrylonitrile. This third copolymer more in particular is a copolymer of styrene and/or α-methyl styrene and acrylonitrile.

The rubber that can be applied in the graft copolymer in the copolymer composition according to the invention is preferably chosen from a group consisting of polybutadiene, butadiene-styrene rubber, butadiene-acrylonitrile rubber, acrylate rubber, ethylene -propylene rubber, ethylene-propylene diene rubber, chloroprene rubber and mixtures of two or more of these rubbers.

There are several suitable ways of preparing the copolymer of styrene and maleic anhydride. An important aspect to be kept in mind when preparing these copolymers is the strong tendency to alternating polymerization of the two monomers. Since both r-values are zero or almost zero, without special measures an alternating polymer will be obtained, possibly in combination with styrene homopolymer.

To obtain a copolymer with a less than equimolar amount of maleic anhydride in the copolymer, which maleic anhydride is distributed statistically in the copolymer, special measures are to be taken. It is important in any case to have the preparation take place continuously, with control of feed, discharge and proper mixing to ensure that the very narrow composition distribution is achieved.

A possible process for the preparation of the copolymer according to the invention is characterized in that the monomers and/or a solution thereof are/is reacted in at least two reaction zones that are in open connection with each other at the top and at the bottom, the reaction mixture being circulated through the reaction zones by means of a mixing device or conveying device.

This can be effected, for instance, by application of a vessel with substantially a cylindrical shell, provided with a coaxial guide tube which is on both ends connected with the vessel, and provided with rotating shafts, which shafts are provided with one or more mixing devices, and a conveying device, which conveying device consists in one or more screw ribbons that are so installed between the inner wall of the vessel and the outer wall of the guide tube as to allow of rotation.

Alternative preparation methods are described, inter alia, in Hanson and Zimmerman, Ind. Eng. Chem. Vol. 49, No. 11 (1957), pp. 1803-1807.

The polymerization of styrene and maleic anhydride is preferably effected in mass or in solution. On the whole, suspension and emulsion polymerization are less suitable since the presence of water in the system may give rise to hydrolysis of maleic anhydride to maleic acid. As polymerization solvent use can be made of butyl acetate, ethyl acetate, methyl isobutyl ketone, dioxane, cyclopentanone, 4-butyrolactone, acetone, pyridine of DMF. By preference, methyl ethyl ketone (MEK) is used. The polymerization can be effected in the presence of 1-80 wt.%, more in particular 10-50 wt.% of solvent.

The copolymer of styrene and maleic anhydride may contain 0.1-5 wt.% of other monomers, such as acrylonitrile or methylmethacrylate. There is however, no need for this.

Polymerization generally takes place under the influence of a compound supplying free radicals under the polymerization conditions. Suitable compounds are benzoyl peroxide, 2,4-dichlorobenzoyl peroxide, ditertiary butyl peroxide, ditertiary butyl peroxybenzoate, dicumyl peroxide, cumene hydroperoxide, diisopropyl benzene hydroperoxide, diisopropyl peroxydicarbonate, teriary butyl perisobutyrate, teriary butyl peroxypivalate, methyl butyl ketone peroxide, stearoyl peroxide, tertiary butyl hydroxyperoxide, lauroyl peroxide, azobisisobutyronitrile, or mixtures of two or more of these compounds. It is also possible to effect the polymerization in the presence of a peroxide combined with a redox system. An example of a peroxide that can suitably be combined with a redox system is cumene hydroperoxide.

The total amount of initiator required can be added simultaneously with the monomer feed. By using a mixture of initiators that have different half-life periods, or by supply at different places, optimum conversion can be achieved.

Optionally, it also is possible to prepare the styrene -maleic anhydride copolymer by thermal polymerization, in the absence of an initiator. In connection with the proportionate difficulty of controlling a thermal polymerization, this is not preferred.

As is customary in the polymerization of vinyl monomers, it is possible to apply a chain length regulator. Compounds customarily applied to this purpose are the mercaptanes, tertiary amyl mercaptane, nonyl mercaptane or n-octyl mercaptane. Other suitable chain .length regulators are diethylene glycol, triethylene glycol, 2,2,4-trimethyl pentane diol-1,5, diethylglycol monobutyl ether, high-boiling aliphatic alcohols, terpenes, and dimers of α-methyl styrene.

The polymerization is preferably effected at a temperature between 50 and 200 ¤C. The polymerization temperature is not very critical, but is determined principally by the pressure to be applied, the solvent used and the initiator to be employed. More in particular, the temperature is between 100 and 160 ¤C. The pressure to be applied generally is between 2 and 100 bar, depending mainly on the temperature and the solvent used. If relatively volatile monomers or other additives are used, there may be advantage in maintaining a pressure above the reaction mixture that is higher than the equilibrium pressure at the temperature applied. This way, a preferential change into the gas phase of one or more additives is prevented.

The reaction conditions are to be chosen such that the desired value of $\Delta M_{20-80}$ is obtained.

The main parameter influencing this is the mixing in the reactor. The width of the MA distribution can be influenced by adjustment of the stirrer speed and reaction conditions applied.

The second component of the polymer composition, the styrene-acrylonitrile copolymer (SAN), the $\alpha$-methyl styrene -acrylonitrile copolymer ($\alpha$-methyl SAN) and/or the acrylonitrile styrene graft copolymer on a rubber (ABS) can be prepared in the customary manner by emulsion, suspension, solution, or mass polymerization or combinations of these. These polymerization methods are generally known. For further information reference can be made for instance, to US patent 3,238,275.

To the polymer composition according to the invention the customary additives can be added, such as stabilizers, antioxidants, lubricants, mould release agents, plasticizers, fillers, whether or not they are reinforcing, pigments and colourants.

The polymer composition can be prepared by mixing in the melt of the various components. To this end, the known batch or continuous kneaders, such as a Banbury mixer, or a single-or double-screw extruder can be used. It is, however, also possible to mix two or more of the components of the polymer composition according to the invention in the liquid phase directly upon their leaving the reactor, whether or not in the presence of a solvent. Thus, a melt or a solution of the polymer mixture is obtained, which can then be processed to solid material in the customary manner. This is preferably done by granulation of the melt, optionally after solvent removal.

The polymer composition according to the invention is highly suitable for the manufacture of all kinds of articles, such as tubes, bottles, furniture, car dashboards, cabinets and housing for electronical and domestic appliances, shoe heels, caravans, skis and surf boards.

Examples I-XII and comparative examples 1-3

On the basis of a graft copolymer of styrene and acrylonitrile on butadiene rubber, a copolymer of $\alpha$-methyl styrene and acrylonitrile, and a copolymer of styrene and maleic anhdyride with different maleic anhydride contents and $\Delta M_{20-80}$ values, a number of polymer compositions were prepared by mixing the various components, in the presence of customary additives, granulating and injection moulding.

The various conditions used and the results obtained are given in the following table.

T A B L E

| Example | ABS parts by weight | αMeSAN parts by weight | SAN parts by weight | SMA parts by weight | Mw (MA) | MA[1] (wt.%) | Δ M20-80 (wt.%) | Δ M10-90 (wt.%) | rubber[2] (wt.%) | Vicat[3] (°C) | Notched Izod (kJ/m[2]) | Tg (torsion damping) (°C) |
|---|---|---|---|---|---|---|---|---|---|---|---|---|
| 1[x] | 39.4 | 30.6 | – | 30 | 223,000 | 14 | > 3 | > 6 | 15 | 109 | 12.6 | |
| 2[x] | 44.7 | 25.3 | – | 30 | 223,000 | 14 | > 3 | > 6 | 17 | 107 | 16.4 | |
| 3[x] | 39.5 | 10.5 | – | 50 | 223,000 | 14 | > 3 | > 6 | 15 | 110 | 8.2 | |
| I | 40 | 30 | – | 30 | 150,000 | 27.5 | < 2 | < 4 | 15.2 | 116 | 14.2 | |
| II | 50 | 25 | – | 25 | 150,000 | 27.5 | < 2 | < 4 | 19 | 110 | 26.8 | |
| IV | 35 | – | – | 65 | 238,000 | 28 | < 2 | < 4 | 13.3 | 134 | 11 | |
| V | 50 | – | – | 50 | 238,000 | 28 | < 2 | < 4 | 19 | 122 | 22 | 135 |
| VI | 65 | – | – | 35 | 238,000 | 28 | < 2 | < 4 | 24.7 | 112 | 31 | |
| VII | 50 | – | – | 50 | 154,000 | 23.6 | < 2 | < 4 | 19 | 117 | 21 | 127 |
| VIII | 35 | – | – | 65 | 154,000 | 23.6 | < 2 | < 4 | 13.3 | 126 | 11 | |
| IX | 50 | – | – | 50 | 164,000 | 26.9 | < 2 | < 4 | 19 | 120 | 23 | 131 |
| X | 50 | – | – | 50 | 169,000 | 29.6 | < 2 | < 4 | 19 | 123 | 22 | 134 |
| XI | 50 | – | – | 50 | 176,000 | 31.2 | < 2 | < 4 | 19 | 125 | 23 | 137 |

x not according to the invention

1 in SMA

2 in the polymer composition

3 unannealed

Examples XII and XIII and comparative example 4

On the basis of the same SMA as in Example I and a graft copolymer of 78 parts by weight of a mixture of styrene and acrylonitrile on 22 parts by weight of EPDM rubber (AES), three polymer compositions were prepared that contained 0,40 and 50 wt.% SMA, respectively.

## TABLE 2

| Example | AES parts by weight | SMA parts by weight | Vicat (unannealed 5 kg)(¤C) | Notched Izod (kJ/m²) | Tg (¤C) |
|---------|------|------|------|------|------|
| 4 | 100 | 0 | 88 | 76.4 | 103 |
| XII· | 60 | 40 | 113 | 10.7 | 119 |
| XIII | 50 | 50 | 118 | 7.9 | 123 |

Example XIV

In the same way as in Example XII a polymer composition was prepared on the basis of 32 parts by weight of a graft copolymer with 69 wt.% EPDM rubber and 68 parts by weight of SMA. The impact strength was 19.1 KJ/m². Torsion damping experiments yielded one single glass transition temperature of 154 ¤C.

Examples XV-XVI and comparative example 5

Using Luran S 776 (RTM, BASF), a graft copolymer of styrene and acrylonitrile on an acrylate rubber (ASA), three compositions were prepared that contained 0, 40 and 50 parts by weight of the SMA of Example I, respectively. The results were as follows.

## TABLE 3

| Example | ASA parts by weight | SMA parts by weight | Vicat (¤C) | Notched Izod (kJ/m²) | Tg (¤C) |
|---------|------|------|------|------|------|
| 5 | 100 | 0 | 93 | 7.9 | - |
| XV | 60 | 40 | 112 | 4.3 | 118 |
| XVI | 50 | 50 | 118 | 3.5 | 120 |

Example XVII-XIX and comparative example 6

On the basis of SMA (Example I) or SAN and a graft copolymer of 20 parts by weight of a mixture of styrene and acrylonitrile on 80 parts by weight of polybutadiene, four polymer compositions were prepared. The results were as follows

## TABLE 4

| Example | ABS parts by weight | SAN parts by weight | SMA parts by weight | Vicat ($\text{\textcurrency}$C) | Notched Izod ($kJ/m^2$) | Tg ($\text{\textcurrency}$C) |
|---------|---------------------|---------------------|---------------------|----------|-------------------------|----------|
| 6 | 47 | 53 | - | 85 | 21.3 | 107 |
| XVII | 47 | - | 53 | 122.5 | 28.2 | 157 |
| XVIII | 31 | - | 69 | 140 | 18.9 | 158 |
| XIX | 19 | - | 81 | 149 | 9.9 | 160 |

## Claims

1. Polymer composition on the basis of a copolymer of a vinyl aromatic compound and maleic anhydride and a copolymer on the basis of a vinyl aromatic compound and acrylonitrile, characterized in that the polymer composition comprises

a) one or more polymers obtained by polymerization of 20-100 parts by weight of a mixture of 60-80 wt.% styrene and/or α-methyl styrene and 20-40 wt.% acrylonitrile in the presence of 0-80 parts by weight of rubber, and

b) a copolymer consisting of 60-80 parts by weight of styrene and 20-40 parts by weight of maleic anhydride, $\Delta$ $M_{20\text{-}80}$ being less than 2 wt.% maleic anhydride.

2. Polymer composition according to claim 1, characterized in that $\Delta$ $M_{10\text{-}90}$ is less than 4 wt.% MA.

3. Polymer composition according to either of claims 1-and 2, characterized in that the polymer composition consists of 10-89.9 wt.% of the polymer on the basis of a vinyl aromatic compound and acrylonitrile, 10-89.9 wt.% of the polymer on the basis of styrene and maleic anhydride, and 0.2-10 wt.% of customary additives.

4. Polymer composition according to claims 1-3, characterized in that the polymer on the basis of a vinyl aromatic compound and acrylonitrile is obtained by polymerizaition of 60-80 wt.% of a mixture consisting of 60-80 wt.% styrene and 20-40 wt.% acrylonitrile in the presence of 20-80 wt.% rubber.

5. Polymer composition according to claim 4, characterized in that the polymer composition also contains a copolymer of styrene and acrylonitrile.

6. Polymer composition according to claims 1-5, characterized in that the rubber is chosen from the group consisting of polybutadiene, butadiene-styrene rubber, butadiene -acrylate rubber, butadiene-acrylonitrile rubber, acrylate rubber, ethylene-propylene rubber, ethylene-propylene diene rubber, chloroprene rubber, and mixtures of two or more of these rubbers.

7. Polymer composition according to any one of claims 1-6, characterized in that the maleic anhydride content of the styrene-maleic anhydride copolymer is between 20 and 30 wt.%, more in particular between 24 and 30 wt.%.

8. Polymer composition substantially as described and elucidated with reference to the examples. .

9. Object made wholly or partly of a polymer composition according to any one of claims 1-8.

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| X | EP-A-0 137 295 (BASF)<br>* Claims *<br><br>--- | 1-9 | C 08 L 35/06<br>C 08 L 25/12<br>C 08 L 25/16<br>C 08 L 51/04<br>C 08 L 55/02 |
| X | EP-A-0 137 296 (BASF)<br>* Claims *<br><br>----- | 1-9 | |

TECHNICAL FIELDS
SEARCHED (Int. Cl.4)

C 08 L

The present search report has been drawn up for all claims

| Place of search | Date of completion of the search | Examiner |
|---|---|---|
| THE HAGUE | 09-08-1986 | FOUQUIER J.P. |